# EUROPEAN PATENT APPLICATION

(11) **EP 4 657 732 A1**
(43) Date of publication of application: **03.12.2025**
(21) Application number: 25179946.6
(22) Date of filing: 30.05.2025
(51) Int. Cl.: H02M 1/00, H02M 1/32, H02M 1/36, H02M 3/156, H02M 3/158

(54) **SYSTEM AND METHOD FOR INTELLIGENT CONTROL OF PARALLEL NON-ISOLATED BOOST CONVERTERS**

(30) Priority: 01.06.2024 IN 202421042733; 22.05.2025 US 202519216192
(71) Applicant: Vertiv Corporation, Westerville, OH 43082 (US)
(72) Inventor: TRIVEDI, Nitin, Westerville (US); SHARMA, Priyal, Westerville (US)
(74) Representative: Beal, James Michael

(57) **Abstract**

A system and method for intelligent control of an array of non-isolated direct current-to-direct current (DC/DC) boost converters, as in a power distribution device, provides for hot-plugging of a new boost converter module into an array of boost converter modules previously connected in parallel, each boost converter module associated with an output voltage and communicatively connected via controller action network (CAN) bus or appropriate communications protocol. The new converter module identifies other converter modules by transmitting a signal via the CANbus, to which the other converter modules respond by transmitting their respective output voltages. The new converter module determines the bus voltage across the converter array based on averaging the output voltages and soft-starts by gradually ramping output voltage to match the bus voltage, thereby reducing or eliminating the risk of current backfeed through the converter modules.

## Description

### CROSS-REFERENCE TO RELATED APPLICATIONS

This application claims priority to prior filed Indian provisional patent application 202421042733 filed June 1, 2024 and to US non-provisional patent application 19/216,192 filed May 22, 2025..

### TECHNICAL FIELD

The present disclosure relates to the field of power electronics. More specifically, the present disclosure relates to the control of parallel non-isolated boost converters.

### BACKGROUND

In the realm of power electronics, the issue of current backfeeding presents a significant challenge. Current backfeeding occurs when current flows in the reverse of the intended direction, which can lead to severe consequences if not properly managed. One major technical limitation of existing systems is the lack of isolation, which is crucial for preventing such reverse currents. Without proper isolation, power semiconductor devices within the converter are susceptible to damage. This can lead to the failure of the entire converter, resulting in increased maintenance costs and reduced system reliability.

For example, with respect to multiple non-isolated boost converters connected in parallel within a power distribution device or system, it may be possible to hot-plug (e.g., hot swap) additional converters while the device is running without disrupting operations or additional downtime. However, if there is a difference in output voltage between the hot-plugged and existing converters, current backfeeding from higher-voltage to lower-voltage converters may occur, i.e., from the hot-plugged converters to the previously connected converters or vice versa. In any event, absent isolation within the converters this current backfeeding may damage semiconductor devices or components within the converters, reducing operating lifespan or requiring unplanned maintenance or replacement with respect to the converters.

### SUMMARY

In a first aspect, a method for management of a system of boost converters is disclosed. In embodiments, the method includes connecting a set of direct current-to-direct current (DC/DC) boost converters in parallel between an input power source and one or more output loads via conductive mains and a communications protocol. For example, the boost converters may be implemented as converter modules hot-pluggable to a power distribution device or other appropriate device. In embodiments, each boost converter has an output voltage. The method includes hot-plugging an additional or new DC/DC boost converter into the parallel array of converters. The method includes identifying, via the new converter and through the communications protocol, the currently operating boost converters of the array. The method includes receiving, via the new converter and through the communications protocol, output voltages from the currently operating boost converters. The method includes determining, via the new converter, a bus voltage across the converter array based on the received output voltages. The method includes soft-starting the new converter by adjusting its output voltage based on the determined bus voltage. In some embodiments, the boost converters are non-isolated. In some embodiments, soft-starting the new converter includes adjusting its output voltage to approximate the bus voltage.

In some embodiments, the communications protocol includes a controller area network bus (CANbus).

In some embodiments, the new converter determines the bus voltage based on an average of the output voltages received from the other converters.

In some embodiments, the new converter receives an output voltage from each of the previously connected boost converters.

In some embodiments, the new converter receives an output voltage from fewer than the full set of previously connected boost converters.

In some embodiments, when the new converter receives an output voltage from fewer than the full set of converters, soft starting the new converter includes adjusting its output voltage to a predetermined default output voltage.

In a further aspect, a system of modular DC/DC boost converters is disclosed. In embodiments, the system includes a set of DC/DC boost converter modules connected in parallel, e.g., within a power distribution device or like device between a power input and one or more output loads supplied by the device, each modular boost converter having an output voltage. The set of converter modules is further interconnected by a communications protocol. Each modular converter is capable of transmitting its output voltage to the other modular converters. In embodiments, the system further includes at least one new or additional modular boost converter hot-pluggable into the system. When the new modular converter is hot-plugged into the system, the new converter identifies the other modular converters via the communications protocol and receives output voltages transmitted therefrom. In embodiments, the new modular converter determines a bus voltage across the converter system based on the received output voltages, and soft-starts by adjusting its output voltage based on the determined bus voltage.

In some embodiments, the new converter determines the bus voltage based on an average of the output voltages received from the other converters.

In some embodiments, the communications protocol includes a controller area network bus (CANbus).

In some embodiments, the new modular converter receives an output voltage from each of the previously connected modular converters.

In some embodiments, the new modular converter receives an output voltage from fewer than the full set of modular converters, and determines the bus voltage based on the set of received output voltages.

In some embodiments, the new modular converter receives an output voltage from fewer than the full set of modular converters, and soft-starts by adjusting its bus voltage to a predetermined output voltage.

In some embodiments, the new modular converter and the other modular converters previously connected to the system are non-isolated boost converters.

In a further aspect, a power distribution device is disclosed. In embodiments, the device includes an alternating current (AC) power input connectible to an AC main or power source. The device includes a power output for delivering operating power to end devices or other output loads, the input and output connected by conductive mains. Further electrically connected to the mains are one or more rectifiers for converting AC input current to DC output power. A set or array of DC-to-DC (DC/DC) boost converter modules are connected in parallel between the rectifiers and the power outlet, each boost converter configured for converting DC output power from the rectifiers into DC output power according to an output voltage. The boost converter modules are also connected by a communications protocol, such that each converter module can transmit its operating voltage to the other converter modules. One or more new or additional boost converter modules may be hot-plugged into the device, e.g., added to the parallel connection without interrupting the operation of the power distribution device. For example, when a new converter module is hot-plugged into the device, the new converter module identifies the other converter modules via the communications protocol and receives output voltages transmitted by each converter module. The new converter module determines a bus voltage across the array of converter modules based on the received output voltages, and soft starts by adjusting its output voltage based on the determined bus voltage, e.g., to minimize voltage differential and prevent current backfeeding through the converter array.

In some embodiments, the communications protocol includes a controller area network bus (CANbus).

In some embodiments, the new converter module receives an output voltage from each of the other converter modules, and determines the bus voltage based on an average of the received output voltages.

In some embodiments, the new converter module receives an output voltage from fewer than the full set of converter modules, and soft starts by adjusting its output voltage to a predetermined or preprogrammed output voltage.

In some embodiments, the new converter module and previously connected converter modules include non-isolated boost converters.

It is to be understood that both the foregoing general description and the following detailed description are exemplary and explanatory only and are not necessarily restrictive of the present disclosure. The accompanying drawings, which are incorporated in and constitute a part of the specification, illustrate subject matter of the disclosure. Together, the descriptions and the drawings serve to explain the principles of the disclosure.

### OBJECTS

Some of the objects of exemplary embodiments of the inventive concepts disclosed herein are as follows:
- To provide a system that avoids current backfeeding to protect converters from potential damage;
- To provide a system that ensures consistent and reliable power at the customer end;
- To provide a system that drastically reduces costs by preventing converter failure;
- To provide a system that minimizes maintenance expenses; and
- To provide a system that reduces the need for additional circuitry for voltage sensing.

Other objects and advantages of the present disclosure will be more apparent from the following description, which is not intended to limit the scope of the present disclosure.

### BRIEF DESCRIPTION OF THE FIGURES

A system for intelligent control prevents back feeding in parallel non-isolated boost converters the present disclosure will now be described with the help of the accompanying drawing, in which:
FIG. 1 is a diagrammatic illustration of a power distribution device incorporating hot-swappable modular non-insulated boost converters configured for intelligent control and current backfeed mitigation according to exemplary embodiments of the inventive concepts disclosed herein;
FIG. 2 is a schematic diagram of a non-insulated modular boost converter compatible with the power distribution device of FIG. 1;
FIG. 3 is a block diagram of a self-integrating modular boost converter system according to example embodiments of the inventive concepts disclosed herein; and
FIG. 4 is a process flow diagram for a method for management of a modular boost converter system according to example embodiments of the inventive concepts disclosed herein.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to a system and method for intelligent control of, and current backfeed mitigation within, a system of modular non-insulated direct current-to-direct current (DC/DC) boost converters, e.g., as implemented within a power distribution device. For example, the system provides a communication interface allowing converters to exchange voltage information with each other and with new converters hot-plugged into the system or device, allowing the hot-plugged converters to determine, and soft-start at, a bus voltage roughly equivalent to the startup or output voltages of the existing conductors, thereby preventing current backfeed in either direction when new converters are hot-plugged. Accordingly, damage to converter components from current backfeed is alleviated or eliminated entirely, allowing the converter modules to run more efficiently and for longer durations without unforeseen downtime for maintenance or replacement.

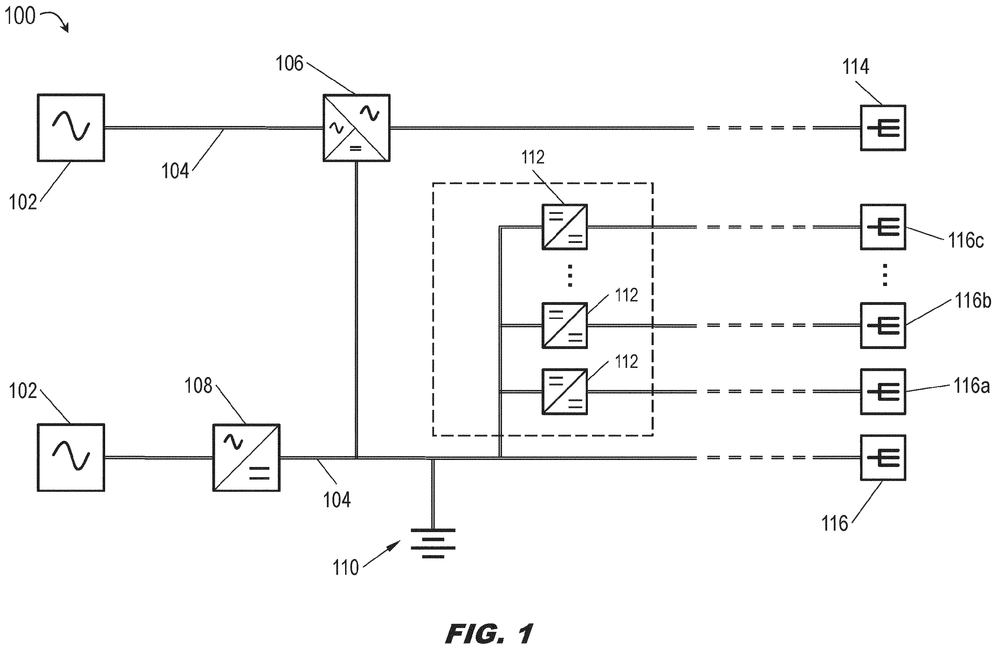

Referring to FIG. 1, a power distribution device 100 is shown. The power distribution device 100 may include alternating current (AC) power source 102, conductors/mains 104, inverters 106 (e.g., AC-to-AC (AC/AC) or direct current (DC)-to-AC (DC/AC), AC/DC rectifiers 108, DC capacitors (not shown), DC batteries 110, DC/DC converter modules 112, AC output loads 114, and DC output loads 116.

In embodiments, the inverters 106 may convert AC input power (e.g., provided from the AC power source 102 via mains 104) to AC output power of a desired voltage (e.g., 120 VAC) for supply to AC output loads 114 (e.g., to servers, switches, or other end-stage information technology (IT) devices or to power distribution units (PDU) configured to supply operating power to said IT devices). Similarly, the inverters 106 may likewise convert the DC power output of the AC/DC rectifiers 108 to AC output power for supply to the AC output loads 114.

In embodiments, the AC/DC rectifiers 108 may convert AC input power (e.g., supply voltage) from the AC power source 102 to DC output power of a nominal voltage (e.g., +12 VDC, and/or at a constant voltage, constant wattage, or constant current mode as desired). For example, this DC output power may be supplied directly to DC output loads 116 or converted to a different output voltage as desired via the DC/DC converter modules 112.

In embodiments, the DC/DC boost converter modules 112 may be connected in parallel to the DC output of the AC/DC rectifiers 108. For example, each DC/DC converter module 112 may include a non-isolated DC/DC boost converter capable of "boosting", or increasing, the DC output provided by the AC/DC rectifiers at a nominal voltage to DC output power of a different output voltage for supply to DC output loads 116a-116c. For example, each DC/DC converter module 112 may have a default output voltage, e.g., 57 V, which may be adjustable within a predetermined range by the end user (e.g., between 56 V and 58 V). Accordingly, within the power distribution device 100 the output voltage of each DC boost converter module 112 may not significantly differ but may still vary, e.g., within +/- 500 mV of each other. Even this voltage differential, however, may lead to some degree of current backfeeding and consequent damage to the non-isolated boost converters and/or their components.

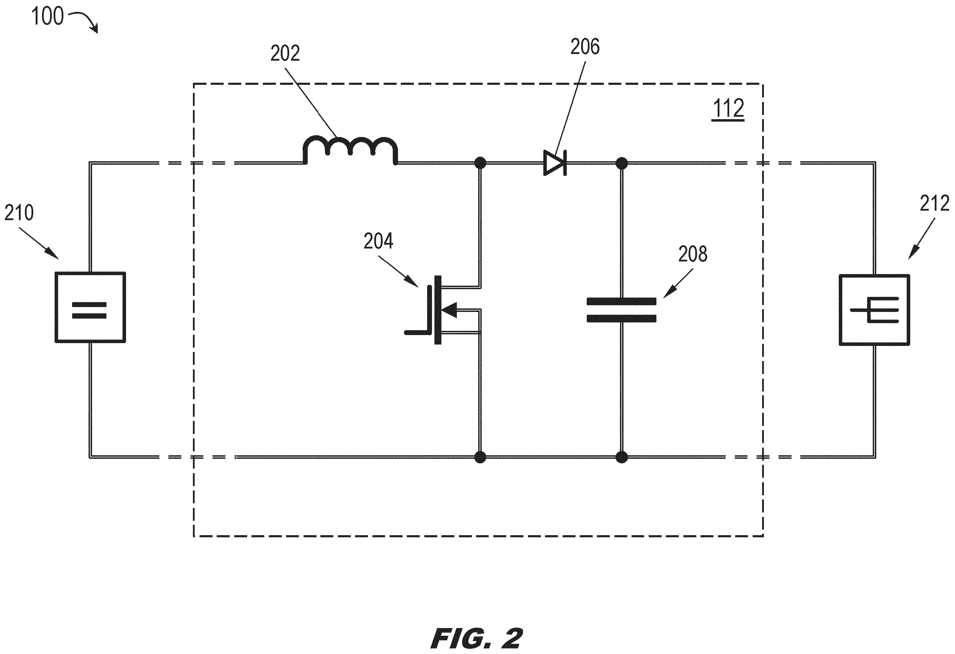

Referring now to FIG. 2, an exemplary non-isolated DC/DC boost converter module 112 of the power distribution device 100 is shown. The DC/DC boost converter module 112 may include inductor 202, switching logic 204, diode 206, and capacitor 208.

In embodiments, the DC/DC boost converter module 112 may be "non-isolated" in that no galvanic isolation or physical separation is provided between the input 210, e.g., the nominal DC output voltage of the AC/DC rectifier 108 (see FIG. 1)) and the output 212, e.g., the DC output voltage of the converter module (e.g., either its default output voltage or the output voltage to which it has been adjusted). Similarly, the DC/DC boost converter module 112 may be "modular" in that each DC/DC boost converter module may be hot-plugged into, or removed from, the power distribution device 100 without substantially disrupting the operation of the power distribution device. For example, the power distribution device 100 may incorporate two, three, four, or other numbers of DC/DC boost converter modules 112 as needed or desired. However, addition of new DC/DC boost converter modules 112 via hot-plugging may create voltage diffrerentials conducive to current backfeed, which the DC/DC boost converter modules may address as described below.

In embodiments, the switching logic 204 may include a metal oxide semiconductor field-effect transistor (MOSFET) or like semiconductor device. For example, the MOSFET may serve as a "breaker MOSFET" in that the switch may close (i.e., turning the switching logic "on") to allow the inductor 202 to release stored energy to the DC output load 116a-116c (see FIG. 1) and to the capacitor 208, the current across the inductor decreasing and the voltage across the inductor equivalent to the voltage differential between the DC input voltage 210 and the DC output voltage. Similarly, the MOSFET may open (i.e., turning the switching logic 204 "off") to disconnect the DC output loads 116a-116c from current flow, thereby preventing voltage differential among DC boost converter modules 112 and any associated current backfeeding and risk of damage to the switching logic.

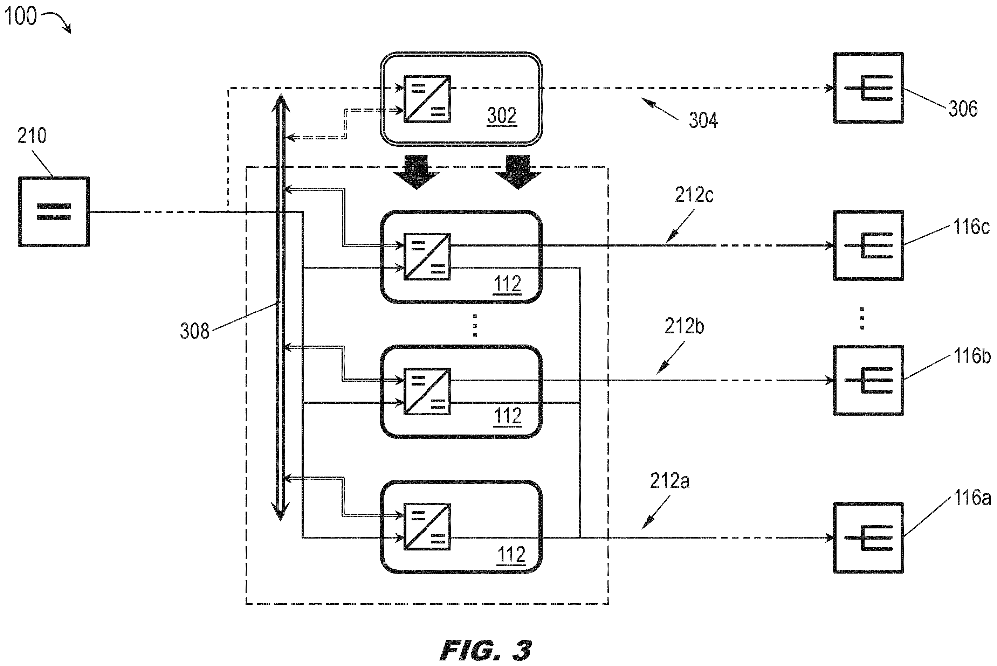

Referring now to FIG. 3, the power distribution device 100 is shown.

In embodiments, the power distribution device 100 may include multiple non-isolated DC/DC boost converter modules 112. For example, each boost converter module 112 may be associated with a different DC output voltage 212a-212c (e.g., based on the voltage needs of the DC output load 116a-116cto which it is supplied).

In embodiments, an additional or new DC/DC boost converter module 302 may be hot-plugged into the power distribution device 100. For example, the boost converter module 302 may be added to the power distribution device 100 while the latter device is operating, without the addition of the converter module substantially disrupting said operation. However, the differential between the various DC output voltages 212a-212c may be significant such that one of these DC output voltages, e.g., the highest or lowest output voltage, may differ significantly from the DC output voltage 304 provided by the new DC/DC boost converter module to its associated DC output load 306. Alternatively, even when the DC output voltages 212a-212c are not substantially different, component tolerances or calibration mismatches may result in minor differences among the DC output voltages, or between one or more of the DC output voltages and the new DC output voltage 304. In either event, when the new boost converter module 302 is hot-plugged into the power distribution device 100, current backfeed may occur from any converter module with higher potential toward any converter module with lower potential. When this current backfeed occurs in a non-isolated boost converter, the switching logic 204 (see FIG. 2) may be damaged and the failure risk of the DC/DC converter module 112, 302 elevated.

In embodiments, the power distribution device 100 may reduce or eliminate the likelihood of current backfeed as described above via intelligent control of the converter array, e.g., provided via digital signal processing (DSP) by the switching logic 204 of each DC/DC boost converter module 112, 302 and via a controller area network bus 308 (CANbus) or any other appropriately similar communications protocol. For example, when the new converter module 302 is plugged into the power distribution device 100, its switching logic 204 may transmit signals via the CANbus 308 attempting to identify other converter modules 112.

In embodiments, the existing or previously added boost converter modules 112 may each respond to this signal by transmitting their respective output voltages 212a-212c via the CANbus 308. Further, upon receiving the output voltages from each existing converter module 112, the new converter module 302 may determine the bus voltage across the array of boost converter modules by averaging the output voltages received from each existing converter module. For example, if the DC output voltages 212a-212c of the three existing converter modules 112 are respectively 56.95 V, 56.95 V, and 56.45 V, the new converter module 302 may determine the current bus voltage at ~56.78 V.

In some embodiments, one or more DC boost converter modules 112 may fail to transmit their respective output voltages 212a-212c via the CANbus 308. For example, when less than the full set of DC boost converter modules 112 are identified by the new converter module 302, or when less than the full identified set of DC boost converter modules transmit their output voltages 212a-212c to the new converter module, the new converter module may instead set its starting output voltage to a predetermined or preprogrammed value (e.g., user-defined output voltage) and soft start as described below. Alternatively, the new converter module 302 may determine the bus voltage based on those DC boost converter modules 112 reporting an output voltage via the CANbus 308 and soft start at this bus voltage.

In embodiments, when the new converter module 302 has determined the current bus voltage, the new converter module may soft start by gradually adjusting its output voltage to the bus voltage. Accordingly, the addition of the new converter module 302 may not disturb the existing voltage differential between the DC output voltages 212a-212c, avoiding current backfeeding through any of the boost converter modules 112, 302.

Additionally, intelligent control of the DC/DC boost converter modules 112, 302 may eliminate the need for additional voltage sensing circuitry, as each converter may communicate its own output voltage to the other converters via the CANbus 308. Similarly, as digital signal processing for intelligent control may be provided via the respective switching logic 204 (see FIG. 2) of each converter, no additional processing components are required. Further, non-isolated boost converters may be substituted for isolated boost converters without the risk of component damage to the non-isolated converters from current backfeeding.

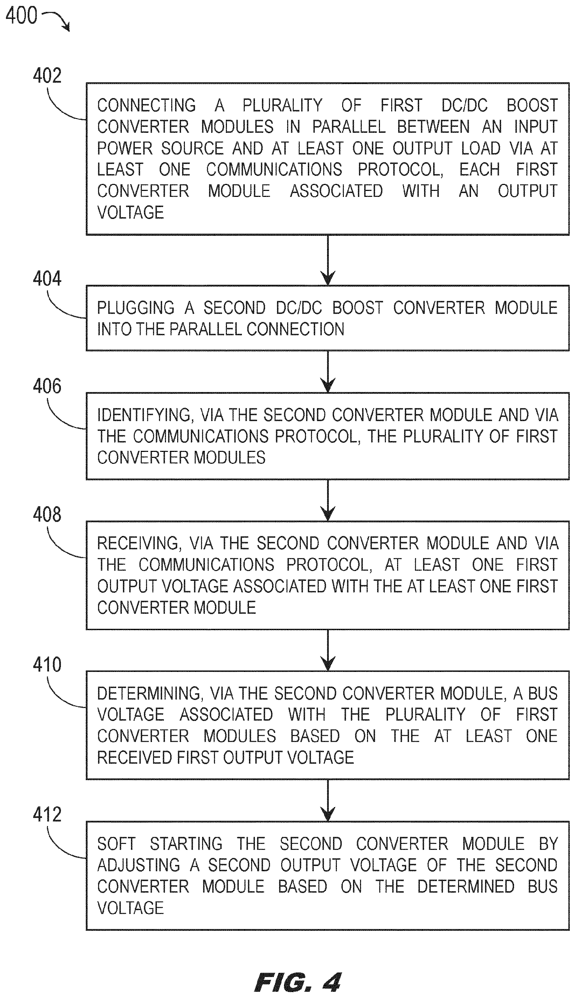

Referring now to FIG. 4, the method 400 may be implemented by the power distribution device 100 and/or the non-isolated DC/DC boost converters 112, 302 thereof and may include the following steps.

At a step 402, an array of DC/DC boost converter modules connected in parallel is provided. For example, each converter module provides DC output power according to an output voltage, and each converter module is communicatively connected via CANbus or other appropriate communications protocol. For example, the DC/DC boost converter modules may include non-isolated boost converters.

At a step 404, a new DC/DC boost converter module is hot-plugged into the converter array, i.e., plugged into the parallel connection while the power distribution device is operating. For example, the new DC/DC boost converter module may likewise have an output voltage.

At a step 406, the new DC/DC boost converter module identifies the previously added DC/DC boost converter modules of the converter array. For example, the new boost converter module may transmit a signal via the CANbus to which the other DC/DC boost converter modules may respond, thereby identifying themselves to the new converter module.

At a step 408, the new DC/DC boost converter module receives output voltages transmitted by the other converter modules in the converter array. For example, the new converter module may receive output voltages from the full array of converter modules, or from less than the full array (i.e., one or more output voltages may not be transmitted or received).

At a step 410, the new DC/DC boost converter module determines a current bus voltage across the converter array based on the respective output voltages of the other DC/DC boost converter modules. For example, the new converter module may determine the bus voltage by averaging the received output voltages.

At a step 412, the new DC/DC boost converter module executes a soft start by gradually adjusting (e.g., ramping) its output voltage based on the determined bus voltage. For example, the new converter module may adjust its output voltage to match or approximate the bus voltage. In some embodiments (e.g., when the new converter module receives output voltages from less than the full set of converter modules) the new converter module may adjust its output voltage to a default output voltage.

### TECHNICAL ADVANCEMENTS

The present disclosure described herein above has several technical advantages including, but not limited to, the intelligent control preventing back feeding in parallel non-isolated boost converters, that:
- utilizes multiple communication protocols like CAN (Controller Area Network), I2C (Inter-Integrated Circuit), and SPI (Serial Peripheral Interface);
- employs smart control mechanisms to regulate the output voltage accurately;
- allows intelligent control and CANbus voltage broadcasting to work together to protect converters from harmful conditions;
- minimizes the risk of converter failure;
- reduces the need for additional voltage sensing circuitry; and
- reduces the frequency and complexity of maintenance by eliminating extra circuitry.

The embodiments herein and the various features and advantageous details thereof are explained with reference to the non-limiting embodiments in the following description.

Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The foregoing description of the specific embodiments so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein. The use of the expression "at least" or "at least one" suggests the use of one or more elements or ingredients or quantities, as the use may be in the embodiment of the disclosure to achieve one or more of the desired objects or results.

Any discussion of devices, articles or the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

While considerable emphasis has been placed herein on the components and component parts of the preferred embodiments, it will be appreciated that many embodiments can be made and that many changes can be made in the preferred embodiments without departing from the principles of the disclosure. These and other changes in the preferred embodiment as well as other embodiments of the disclosure will be apparent to those skilled in the art from the disclosure herein, whereby it is to be distinctly understood that the foregoing descriptive matter is to be interpreted merely as illustrative of the disclosure and not as a limitation.

The disclosure comprises the following items:
1. A method for management of a system of boost converters, the method comprising:
   connecting a plurality of first direct current-to-direct current (DC/DC) boost converter modules in a parallel connection between an input power source and at least one output load via at least one communications protocol, each first converter module associated with a first output voltage;
   plugging a second DC/DC boost converter module into the parallel connection;
   identifying, via the second converter module and via the at least one communications protocol, the plurality of first converter modules;
   receiving, via the second converter module and via the at least one communications protocol, at least one first output voltage associated with the at least one first converter module;
   determining, via the second converter module, a bus voltage associated with the plurality of first converter modules based on the at least one received first output voltage;
      and
   soft starting the second converter module by adjusting a second output voltage of the second converter module based on the determined bus voltage.
2. The method of item 1, wherein the at least one communications protocol includes a controller area network bus (CANbus).
3. The method of item 1 or item 2, wherein determining, via the second converter module, a bus voltage associated with the plurality of first converter modules includes:
   determining the bus voltage based on an average of the at least one received first output voltage.
4. The method of any preceding item, wherein receiving, via the second converter module and via the at least one communications protocol, at least one first output voltage associated with the at least one first converter module includes:
   receiving the first output voltage from each first converter module via the communications protocol.
5. The method of any preceding item, wherein the plurality of first converter modules is a plurality of N first converter modules, wherein N is an integer not less than two, and:
   wherein receiving, via the second converter module and via the at least one communications protocol, at least one first output voltage associated with the at least one first converter module includes:
   receiving the first output voltage from fewer than N of the first converter modules.
6. The method of any preceding item, wherein soft starting the second converter module by adjusting a second output voltage of the second converter module based on the determined bus voltage includes:
   adjusting the second output voltage to a predetermined default output voltage.
7. A modular converter system, comprising:
   a plurality of first direct current-to-direct current (DC/DC) boost converter modules connected in a parallel connection between a power input and at least one output load, each first converter module associated with a first output voltage;
   at least one communications protocol connecting the plurality of first converter modules,
   wherein each first converter module is configured to transmit its associated first output voltage to the other first converter modules via the at least one communications protocol;
      and
   at least one second converter module configured for:
      hot-plugging into the parallel connection;
      identifying, via the at least one communications protocol, the plurality of first converter modules;
      receiving, via the at least one communications protocol, the first output voltage from at least one of the plurality of first converter modules;
      determining a bus voltage associated with the plurality of first converter modules based on the at least one received first output voltage;
         and
      soft starting by adjusting a second output voltage of the second converter module based on the determined bus voltage.
8. The modular converter system of item 7, wherein the at least one communications protocol includes a controller area network bus (CANbus).
9. The modular converter system of item 7 or item 8, wherein the second converter module is configured to determine the bus voltage based on an average of the at least one received first output voltage.
10. The modular converter system of any of items 7-9, wherein the second converter module is configured to receive the first output voltage from each first converter module via the communications protocol.
11. The modular converter system of any of items 7-10, wherein:
   the plurality of first converter modules is a plurality of N first converter modules, wherein N is an integer not less than two;
      and
   wherein the second converter module is configured for:
      receiving the first output voltage from fewer than N of the first converter modules;
         and
      determining the bus voltage based on the fewer than N received first output voltages.
12. The modular converter system of any of items 7-11, wherein at least one of the plurality of first converter modules or the second converter module includes a non-isolated boost converter.
13. A power distribution device, comprising:
   at least one alternating current (AC) power input connectible to an alternating current (AC) power source;
   at least one power outlet configured to deliver an output load to an end device, the at least one power outlet electrically coupled to the at least one AC power input via at least one conductor;
   at least one rectifier electrically coupled to the at least one conductor, the at least one rectifier configured to convert an AC current from the at least one power input to a first direct current (DC) power output;
      and
   a plurality of DC-to-DC (DC/DC) boost converter modules connected in a parallel connection and electrically coupled to the at least one rectifier and the at least one power outlet via the at least one conductor,
      wherein each boost converter module is configured to convert the first DC power output to a second DC power output corresponding to an output voltage,
         and
      wherein the plurality of boost converter modules comprises: two or more first converter modules connected via at least one communications protocol, each first converter module associated with a first output voltage and configured to transmit its first output voltage to the other first converter modules via the at least one communications protocol;
         and
      at least one second converter module associated with a second output voltage, the at least one second converter module configured for:
         hot-plugging into the parallel connection;
         identifying at least one of the two or more first converter modules via the at least one communications protocol;
         receiving, via the communications protocol, the first output voltage from the at least one identified first converter module
         determining a bus voltage associated with the plurality of first converter modules based on the at least one received first output voltage;
            and
         soft starting by adjusting the second output voltage based on the determined bus voltage.
14. The power distribution device of item 13, wherein the at least one communications protocol includes a controller area network bus (CANbus).
15. The power distribution device of item 13 or item 14, wherein the second converter module is configured to determine the bus voltage based on an average of the at least one received first output voltage.
16. The power distribution device of any of items 13-15, wherein the second converter module is configured to receive the first output voltage from each first converter module via the communications protocol.
17. The power distribution device of any of items 13-16, wherein:
   the plurality of first converter modules is a plurality of N first converter modules;
      and
   wherein the second converter module is configured for:
      receiving the first output voltage from fewer than N of the first converter modules;
         and
      soft starting by adjusting the second output voltage based on a predetermined output voltage.
18. The power distribution device of any of items 13-17, wherein each first converter modules and each second converter module includes a non-isolated boost converter.

## Claims

1. A method for management of a system of boost converters, the method comprising:
connecting a plurality of first direct current-to-direct current, DC/DC, boost converter modules in a parallel connection between an input power source and at least one output load via at least one communications protocol, each first converter module associated with a first output voltage;
plugging a second DC/DC boost converter module into the parallel connection;
identifying, via the second converter module and via the at least one communications protocol, the plurality of first converter modules;
receiving, via the second converter module and via the at least one communications protocol, at least one first output voltage associated with the at least one first converter module;
determining, via the second converter module, a bus voltage associated with the plurality of first converter modules based on the at least one received first output voltage;
and
soft starting the second converter module by adjusting a second output voltage of the second converter module based on the determined bus voltage.

2. The method of Claim 1, wherein the at least one communications protocol includes a controller area network bus,CANbus.

3. The method of Claim 1 or Claim 2, wherein determining, via the second converter module, a bus voltage associated with the plurality of first converter modules includes:
determining the bus voltage based on an average of the at least one received first output voltage.

4. The method of any preceding Claim, wherein receiving, via the second converter module and via the at least one communications protocol, at least one first output voltage associated with the at least one first converter module includes:
receiving the first output voltage from each first converter module via the communications protocol.

5. The method of any preceding Claim, wherein the plurality of first converter modules is a plurality of N first converter modules, wherein N is an integer not less than two, and:
wherein receiving, via the second converter module and via the at least one communications protocol, at least one first output voltage associated with the at least one first converter module includes:
receiving the first output voltage from fewer than N of the first converter modules.

6. The method of any preceding Claim, wherein soft starting the second converter module by adjusting a second output voltage of the second converter module based on the determined bus voltage includes:
adjusting the second output voltage to a predetermined default output voltage.

7. A modular converter system, comprising:
a plurality of first direct current-to-direct current, DC/DC, boost converter modules connected in a parallel connection between a power input and at least one output load, each first converter module associated with a first output voltage;
at least one communications protocol connecting the plurality of first converter modules,
wherein each first converter module is configured to transmit its associated first output voltage to the other first converter modules via the at least one communications protocol;
and
at least one second converter module configured for:
hot-plugging into the parallel connection;
identifying, via the at least one communications protocol, the plurality of first converter modules;
receiving, via the at least one communications protocol, the first output voltage from at least one of the plurality of first converter modules;
determining a bus voltage associated with the plurality of first converter modules based on the at least one received first output voltage;
and
soft starting by adjusting a second output voltage of the second converter module based on the determined bus voltage.

8. The modular converter system of Claim 7, wherein the at least one communications protocol includes a controller area network bus, CANbus.

9. The modular converter system of Claim 7 or Claim 8, wherein the second converter module is configured to determine the bus voltage based on an average of the at least one received first output voltage.

10. The modular converter system of any of Claims 7-9, wherein the second converter module is configured to receive the first output voltage from each first converter module via the communications protocol.

11. The modular converter system of any of Claims 7-10, wherein:
the plurality of first converter modules is a plurality of N first converter modules, wherein N is an integer not less than two;
and
wherein the second converter module is configured for:
receiving the first output voltage from fewer than N of the first converter modules;
and
determining the bus voltage based on the fewer than N received first output voltages.

12. The modular converter system of any of Claims 7-11, wherein at least one of the plurality of first converter modules or the second converter module includes a non-isolated boost converter.

13. A power distribution device, comprising:
at least one alternating current, AC, power input connectible to an alternating current, AC, power source;
at least one power outlet configured to deliver an output load to an end device, the at least one power outlet electrically coupled to the at least one AC power input via at least one conductor;
at least one rectifier electrically coupled to the at least one conductor, the at least one rectifier configured to convert an AC current from the at least one power input to a first direct current, DC, power output;
and
the modular converter system of any of claims 7-12.
